(19) Europäisches Patentamt

European Patent Office

Office européen des brevets

(11) **EP 4 636 137 A2**

(12) **EUROPEAN PATENT APPLICATION**

(43) Date of publication:
**22.10.2025   Bulletin 2025/43**

(21) Application number: **25160832.9**

(22) Date of filing: **28.02.2025**

(51) International Patent Classification (IPC):
**C25D 1/04** *(2006.01)*        **C25D 3/38** *(2006.01)*
**H01M 4/66** *(2006.01)*        **H01M 10/0525** *(2010.01)*

(52) Cooperative Patent Classification (CPC):
**H01M 4/661; C25D 1/04; C25D 3/38; H01M 4/667; H01M 10/0525**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:   **01.03.2024   US 202463560387 P**
            **27.11.2024   CN 202411711564**

(71) Applicant: **Chang Chun Petrochemical Co., Ltd.
104 Taipei City (TW)**

(72) Inventors:
• **Chou, Jui-Chang**
  **Taipei City (TW)**
• **Yang, Wen-Ting**
  **Taipei City (TW)**
• **Huang, Chien-Ming**
  **Taipei City (TW)**

(74) Representative: **Manitz Finsterwald
Patent- und Rechtsanwaltspartnerschaft mbB
Martin-Greif-Straße 1
80336 München (DE)**

(54) **COPPER FOIL AND CURRENT COLLECTOR FOR LITHIUM ION SECONDARY BATTERY AND LITHIUM ION SECONDARY BATTERY**

(57)    Provided is an copper foil for lithium ion secondary batteries having two opposite sides, wherein the copper foil has a texture coefficient of crystal plane (220) "TC (220)" of $\geq 1.36$ and a texture coefficient of crystal plane (311) "TC (311)" of $\geq 0.79$. The present disclosure further provides a current collector for lithium ion secondary batteries and a lithium ion secondary battery including the same.

EP 4 636 137 A2

**Description**

BACKGROUND

1. Technical Field

The present invention relates to a copper foil, especially to an electrolytic copper foil applied in a lithium ion secondary battery.

2. Description of Associated Art

With the popularization of portable electronic devices (PEDs), electric vehicles (EVs), hybrid electric vehicles (HEVs), energy storage systems (ESSs), lithium ion secondary batteries, which have the advantages of high capacity, high electric energy density, rapid charging, and no memory effect, are being actively developed to meet the current requirements in the rapidly growing market. In lithium ion secondary batteries, copper foil can be used as a current collector and an electrode.

Lithium ion secondary batteries generate heat during charging-discharging cycles, which may cause the thermal deterioration of the copper foil, resulting in a significant declined mechanical strength. In addition, the expansion and shrinkage of an active material during the charging-discharging cycles may apply stress on the copper foil repeatedly. Therefore, if the copper foil's structure is insufficiently tolerant of these strict environmental conditions, it is prone to damage, potentially degrading its performance and reducing the reliability and lifespan of the lithium ion secondary battery.

SUMMARY

Given all these above, there is an urgent need for a copper foil with high tolerance and strength to solve the problems described above. The present disclosure provides a copper foil having two opposite sides for a lithium ion secondary battery, wherein the copper foil has a texture coefficient of the crystal plane (220) (TC(220)) of $\geq 1.36$ and a texture coefficient of the crystal plane (311) (TC(311)) of $\geq 0.79$.

In an embodiment, the copper foil has the TC(220) ranging from 1.36 to 2.75 and the TC(311) ranging from 0.79 to 1.10.

In an embodiment, the copper foil has the TC(311) ranging from 0.85 to 1.05.

In an embodiment, the copper foil has a rate of TC(220) change of <5% after being heated at 200°C in a vacuum for 5 hours.

In an embodiment, the copper foil has a rate of TC(311) change of <6% after being heated at 200°C in a vacuum for 5 hours.

In an embodiment, the copper foil has a tensile strength of $\geq 50$ kg/mm$^2$.

In an embodiment, the copper foil has a tensile strength of $\geq 50$ kg/mm$^2$ after being heated at 200°C in a vacuum for 5 hours.

In an embodiment, the copper foil has a tensile strength deterioration rate of $\leq 10\%$ after being heated at 200°C in a vacuum for 5 hours.

In an embodiment, the copper foil is a surface-treated copper foil comprising a copper layer and a rust-proof layer.

In an embodiment, the rust-proof layer is on at least one surface of the copper layer, and the rust-proof layer can be formed from an organic material or an inorganic material.

In an embodiment, the inorganic material for forming the rust-proof layer comprises at least one selected from the group consisting of chromium, nickel, zinc, cobalt, manganese, and tin.

In an embodiment, the organic material for forming the rust-proof layer comprises at least one selected from the group consisting of carbon, oxygen, nitrogen, sulfur, and silicon.

In an embodiment, the organic material for forming the rust-proof layer comprises at least one selected from the group consisting of porphyrin group, silane group, benzotriazole and triazine trithiol.

The present disclosure provides a current collector for a lithium ion secondary battery, which comprises the copper foil described herein.

The present disclosure further provides a lithium ion secondary battery, which comprises the current collector described herein.

In the present disclosure, by regulating the crystalline orientation of a copper foil, especially making the preferred orientation of the crystal plane (220) and the crystal plane (311) higher, a copper foil having high tensile strength and a low tensile strength deterioration rate under thermal condition, i.e., having high dimensional stability, can be obtained. Thus, when the copper foil is used as a current collector in lithium ion secondary batteries, it exhibits a good tolerance to charging-discharging cycles, thereby achieving high reliability of the lithium ion secondary battery.

BRIEF DESCRIPTION OF THE DRAWINGS

The implementation of the present invention will be described through exemplary drawings.

FIG. 1 is a flow diagram of preparation of the copper foil of the present disclosure, and the flow comprises an optional rust-proof treatment.
FIG. 2 is a schematic diagram of side view of the copper foil of the present disclosure.

DETAILED DESCRIPTION OF THE PREFERRED EMBODIMENTS

The implementation of the present disclosure will be illustrated by the following specific embodiments, and one having ordinary skill in the art can easily realize other advantages and effects of the present disclosure based on the content described herein.
It should be noted that, all ranges and values recited in the present invention are inclusive and combinable. The present disclosure discloses various ranges, and any value or point falling into the ranges described herein are also encompassed by the present disclosure. Also, any value or point falling into the ranges described herein can be used as the lower or upper limit to derive a subrange which is also encompassed in the present disclosure.
Unless stated otherwise, "comprising," "containing," "including," or "having" particular elements used herein means that other elements such as units, components, structures, regions, parts, devices, systems, steps and connection relationships can be also included rather than excluded. That is, a statement that the claimed invention "comprises", "includes", "contains" or "has" particular elements actually allows for the presence of other unspecified elements, whether necessary or not.
Terms such as "upper" and "lower" recited herein are merely used for convenience in illustrating specific embodiments of the present invention instead of limiting the range capable of being performed by the present invention. Adjustments, exchanges and alternations of their relative positions should be considered within the range capable of being performed by the present invention as long as they do not substantially alter the technical content of the present invention.
The singular forms "a/an" and "the" described herein also include plural forms, and the term "or" is interchangeable with "and/or", unless otherwise stated explicitly.

**<Copper foil>**

The copper foil herein may be prepared through electrodeposition (also referred as electrolysis, electrolytic deposition, or electro-plating), and exemplary manufacturing methods of which will be described hereinafter. An electrolytic copper foil has two opposite sides. One side, referred to as the drum side through which the electrolytic copper foil contacts a cathode drum before being peeled off. The other side, identified as the deposition side which is opposite to the drum side and refers to the side not contacting with the cathode drum before the electrolytic copper foil is peeled off.
The copper foil consists essentially of copper, e.g., containing a copper content of 99 wt% or more. The copper foil of the present disclosure may have a thickness of 3-20 $\mu$m, or 4-10 $\mu$m, and a surface roughness Rz (JIS 0601B-1994) of 2 $\mu$m or less. In first aspect, the present disclosure provides a copper foil for lithium ion secondary batteries, having two opposite sides, wherein the copper foil has a texture coefficient of the crystal plane (220) (TC(220)) of $\geq$ 1.36 and a texture coefficient of the crystal plane (311) (TC(311)) of $\geq$ 0.79.
Said "texture coefficient" refers to a measure of crystal structure or a crystal direction distribution of a material in the art, wherein "texture" refers to that most of crystal grains in a polycrystalline material have similar crystal orientations, and "texture coefficient" is used to express the relative distribution of the texture on a certain crystal plane. For example, a texture coefficient of crystal plane (220) (TC(220)) refers to the relative distribution of the crystal plane (220) in the polycrystalline material. The texture coefficient of a certain crystal plane of a copper foil is obtained by performing an X-ray diffraction (XRD) analysis on one side of the copper foil in a stable state and calculating by Formula (I).

$$TC(hkl) = \frac{I(hkl)/I_0(hkl)}{(1/n)\Sigma I(hkl)/I_0(hkl)} \quad (I)$$

In Formula (I), TC(hkl) represents the texture coefficient of crystal plane (hkl), with a larger value of TC reflecting a higher preferred orientation of the crystal plane. I(hkl) represents the diffraction intensity of a sample on crystal plane (hkl). $I_0$(hkl) represents the standard diffraction intensity on crystal plane (hkl) (i.e., the data tested on copper powder and specified by American Society for Testing and Materials (ASTM) PDF#040836). n represents the number of diffraction peaks in the range of specific diffraction angles (2θ).

The stable state can be, e.g., to let a copper foil prepared stand still for a period of time, e.g., 1 day or more, 3 days or more, 7 days or more, and also can be subjecting a copper foil prepared to aging treatment, e.g., to let it stand still for aging at a temperature of 35-45°C and humidity of 10-25% for 3 days.

Herein, a copper foil is heated at 200°C in a vacuum for 5 hrs to simulate thermal condition, and crystal changes of the copper foil are observed under the thermal condition. After being heated at 200°C in a vacuum for 5 hrs, the texture coefficients of crystal plane (220) and crystal plane (311) of the copper foil can be expressed as TC'(220) and TC'(311), respectively. The rate of TC(220) change can be obtained from the difference between TC(220) and TC'(220), and similarly, the rate of TC(311) change can be obtained from the difference between TC(311) and TC'(311).

In general, polycrystalline materials should have randomly distributed crystal orientations; however, by controlling certain factors, most of the crystal grains in the material may have similar crystal orientations, thereby giving the material anisotropy. The inventors have found that a copper foil with a crystal structure having certain texture coefficients exhibits significantly improved mechanical properties including tensile strength and deterioration rate of tensile strength under the thermal condition. Furthermore, significantly reduced decay of tensile strength under the thermal condition enhances the tolerance of a battery.

After intensive studies, the inventors have found that the texture of a copper foil is associated with the tensile strength and deterioration rate of tensile strength under the thermal condition (thermal stability). Wrinkles or cracks easily appears in a copper foil when the copper foil has a larger deterioration rate of tensile strength under the thermal condition. The inventors have found that by regulating the texture coefficients TC(220) and TC(311) of a copper foil, e.g., making the texture coefficient of crystal plane (220) (TC(220)) be $\geq$ 1.36 and the texture coefficient of crystal plane (311) (TC(311)) be $\geq$ 0.79, a desired high tensile strength can be obtained and the copper foil has a smaller deterioration rate of tensile strength under the thermal condition. In particular, when a copper foil has texture coefficients described above, it can have a high tensile strength more than or equal to 50 kg/mm$^2$, and the tensile strength can still be maintained at more than or equal to 50 kg/mm$^2$ after being heated at 200°C in a vacuum for 5 hrs; i.e., the deterioration rate of tensile strength can be maintained at less than or equal to 10% after being heated at 200°C in a vacuum for 5 hrs.

In an embodiment, the copper foil has TC(220) ranging from 1.36 to 2.75 and TC(311) ranging from 0.79 to 1.10.

In an embodiment, the copper foil has TC(311) ranging from 0.85 to 1.05. In this range, the deterioration rate of tensile strength under the thermal condition of the copper foil is further suppressed. For example, the deterioration rate of tensile strength can reach less than or equal to 5%.

In an embodiment, the copper foil has a rate of TC(220) change of < 5% after being heated at 200°C in a vacuum for 5 hours. In another embodiment, the copper foil has a rate of TC(311) change of < 6% after being heated at 200°C in a vacuum for 5 hours. In the present disclosure, by controlling the texture coefficients of the copper foil both at a stable state and under the thermal condition, in particular controlling a rate of change of the texture coefficient TC(220) to be less than or equal to 5% and controlling a rate of change of TC(311) to be less than or equal to 6%, the crystal structure of the copper foil is stabilized and thus the copper foil exhibits higher tensile strength even at an elevated temperature, improving the shortage of the prior that mechanical properties of copper foils deteriorate due to heating.

In an embodiment, the copper foil may have a multi-layered structure. For example, the copper foil have a treatment layer such as a rust-proof layer on at least one surface of a copper layer, and the rust-proof layer may be formed from an organic material or an inorganic material. In an embodiment, a rust-proof layer may be formed by plating chromium, nickel, zinc, cobalt, manganese, tin, or a mixture thereof, for example, a chromium-plated rust-proof layer. In an embodiment, at least one surface of the copper foil may comprise at least one element selected from carbon, oxygen, nitrogen, sulfur, silicon, etc. by applying an organic compound, for example, comprising porphyrin group, silane group, benzotriazole, triazine trithiol, and a combination thereof. The rust-proof layer, if present, generally has a thickness of 0.2 nm to 100 nm, but not limited thereto. For example, in order to find application in sulfur solid state batteries, a corrosion resistant metal may be appropriately selected and the thickness of the rust-proof layer may be increased to resist to corrosion caused by the electrolyte, e.g., a nickel layer with a thickness of 0.5 μm or more can be used as the rust-proof layer.

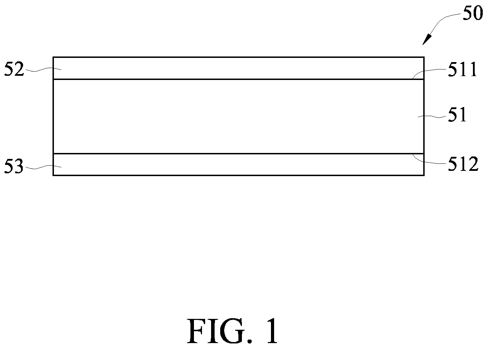

The copper foil of the present disclosure is shown as, e.g., in FIG. 1, a copper foil 50 can comprise a copper layer 51, and a rust-proof layer on at least one surface of the copper layer 51. The embodiment shown in FIG. 1 is one having rust-proof layers 52 and 53 respectively on the first side 511 and second side 512 of the copper layer, but not limited thereto. The rust-proof layers on two sides of the copper foil of the present disclosure also can be made of different materials, e.g., a nickel rust-proof layer on one side and a chromium rust-proof layer on the other side, but not limited thereto. In other embodiment, the copper foil 50 may only have a copper layer 51, without any rust-proof layer 52,53, and in this case, the copper foil 50 is equivalent to the copper layer 51.

**<Method of manufacturing copper foil>**

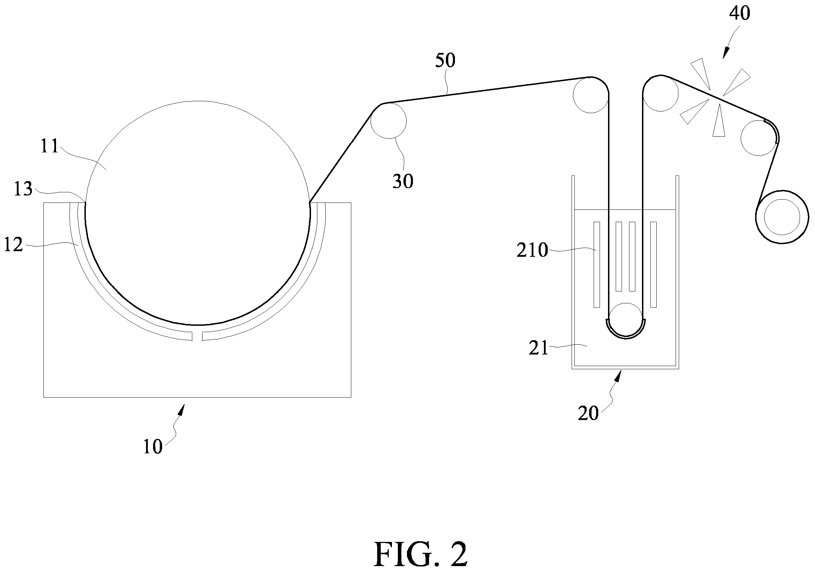

The copper foil of the present disclosure may be prepared through electro-deposition (i.e., as an electrolytic copper foil) and may be manufactured using the exemplary method described below, but is not limited thereto. As shown in FIG. 2, the equipment for producing a copper foil 50 comprises an electro-deposition device 10, an optional rust-proof treatment device 20 and a series of guide rollers 30. The electro-deposition device (or electrolysis device) 10 comprises a cathode drum 11, an insoluble anode plate 12 and a copper-containing electrolytic solution 13. The cathode drum 11 is a rotatable titanium cathode drum. The insoluble anode plate 12 is an $IrO_2$-coated titanium plate positioned below the cathode drum 11 and approximately surrounding the lower half portion of the cathode drum 11, with an anode surface facing to the cathode drum. The cathode drum 11 and the insoluble anode plate 12 are spaced apart to hold the copper-containing electrolytic solution 13. Once filled with the copper-containing electrolytic solution 13, the cathode drum 11 is partially immersed in the copper-containing electrolytic solution 13. A current is then applied between the cathode drum 11 and the insoluble anode plate12, resulting in the electro-deposition of copper onto the surface of the drum, forming the copper foil 50 (i.e., electrolytic copper foil).

Optionally, the product manufactured from the above method may be further treated to obtain a copper foil with a multilayer structure. In this embodiment, as shown in Fig. 2 and Fig. 1, the electrolytic copper foil prepared by the above process serves as a copper layer 51, which may be peeled off from the surface of the cathode drum 11 and may undergo optional subsequent treatments. These treatments may comprise one or more rust-proof treatment, which forms a rust-proof layer 52 (and 53) on at least one surface of the copper layer 51 through a rust-proof treatment device 20. The rust-proof treatment device 20 includes a rust-proof treatment cell 21 and plates displaced therein. The copper layer 51 can be delivered via a series of guide rollers 30, including that the copper layer 51 peeled off from the surface of the cathode drum 11 is delivered to the rust-proof treatment device 20 for rust-proof treatment, and also including that the copper layer 51 subjected with the rust-proof treatment passes through an air blade 40 to remove excessive rust-proof substances and other substances on the surface. The copper foil 50 comprising the copper layer 51 and the rust-proof layer 52 (and 53) (i.e., surface-treated copper foil) can finally be wound on the last guide roller.

By regulating the conditions, including composition (e.g., concentrations of copper ions, sulfuric acid, chloride ions, additives in the copper-containing electrolytic solution, etc.) of the copper-containing electrolytic solution, current density, temperature, etc. during electro-deposition, the crystal growth of the electrolytic copper foil can be controlled. The electro-deposition parameters can be regulated as needed during the process for the electrolytic copper foil of the present disclosure. In one embodiment thereof, the formulation of the copper-containing electrolytic solution used in the electro-deposition step can comprise copper sulfate, sulfuric acid, chloride ions, additives, but not limited thereto. In an embodiment, copper sulfate ($CuSO_4 \cdot 5H_2O$) may be 200 g/L to 400 g/L, sulfuric acid may be 80 g/L to 150 g/L, chloride ion concentration may be 20 ppm to 100 ppm, and the additives can be less than 90 ppm.

The additive described above may be, e.g., polymer such as gelatin, polyethylene glycol, cellulose-based water-soluble polymer, polyethyleneimine, polyacrylamide etc., but not limited thereto. In view of regulating TC(220) and TC(311), a polymer and a decomposition product thereof may be used as an additive. Based on the entity of the copper-containing electrolytic solution, the polymer is present at a content of 20 to 50 ppm, the decomposition product of polymer is present at a content of 5 to 20 ppm, and the ratio of the decomposition product of polymer to the polymer is 0.2 to 0.5. Among these, the undecomposed polymer may have a molecular weight ranging from 20,000 to 100,000, which may be regulated as needed.

The decomposition product may be prepared by decomposing the polymer described above by electrolysis. For example, an aqueous solution containing the polymer is added between a titanium plate as a positive electrode and a copper plate as a negative electrode and then electrolysis is performed using direct current. In addition to the polymers described above, an adjuvant may also be added to the aqueous solution, such as sodium thiosulfate, potassium sulfide, sodium 3-mercapto-1-propanesulfonate (MPS), and bis-(sodium sulfopropyl)-disulfide (SPS). Electrolysis may be performed at a direct current of 5-30 A/dm$^2$ for 8-15 seconds. The adjuvant may be present at a concentration of 50 ppm or less, based on the entity of the copper-containing electrolytic solution.

The rust-proof treatment, as shown in FIG. 2, for example, involves immersing the copper foil 50 (or the copper layer) in the rust-treatment cell 21 filled with rust-proof solution, and forming a rust-proof layer on its surface through electrodeposition using electrode plates 210. In addition, the copper foil also may be immersed in a rust-proof solution to allow the molecules therein to be adsorbed or bonded on the surface of the copper foil. The material of the rust-proof layer may be selected according to the needs, and the rust-proof solution used may be either an organic rust-proof solution containing azoles or an inorganic rust-proof solution such as chromium rust-proof solution, nickel rust-proof solution, zinc rust-proof solution, tin rust-proof solution, and the like.

In one embodiment thereof, the rust-proof solution may be chromium rust-proof solution, and chromium trioxide ($CrO_3$) concentration may be 1.5 g/L to 5.0 g/L. The rust-proof treatment may be performed at a current density of 0.5 A/dm$^2$ to 6.0 A/dm$^2$, the chromium rust-proof solution temperature may be 20°C to 40°C, and the treatment time may be 2 to 4 seconds, but not limited thereto.

In one embodiment thereof, the rust-proof solution may be nickel rust-proof solution, in which nickel sulfate ($NiSO_4$) concentration may be 1.5 g/L to 5.0 g/L, boric acid ($H_3BO_3$) concentration may be 15 g/L to 40 g/L, and chloride ion concentration may be 10-30 ppm. The rust-proof treatment may be performed at a current density of 0.3 A/dm$^2$ to 0.8

A/dm$^2$, the nickel rust-proof solution temperature may be 15°C to 50°C, pH value may be 3 to 4, and the treatment time may be 2 to 20 seconds, but not limited thereto.

In one embodiment thereof, the rust-proof solution may be zinc rust-proof solution, in which zinc sulfate ($ZnSO_4$) concentration may be 8.0 g/L to 12.0 g/L. The rust-proof treatment may be performed at a current density of 0.2 A/dm$^2$ to 0.5 A/dm$^2$, the zinc rust-proof solution temperature may be 15°C to 20°C, pH value may be 12 to 14, and the treatment time may be 2 to 20 seconds, but not limited thereto.

### <Current collector for lithium ion secondary batteries>

A second aspect of the present disclosure provides a current collector for lithium ion secondary batteries, comprising the copper foil of the present disclosure. At least one layer of active material is coated on at least one side of the copper foil to prepare a current collector and an electrode of lithium ion secondary batteries, wherein the current collector may be an positive electrode current collector and/or a negative electrode current collector, and the electrode can be an positive electrode and/or a negative electrode.

The active material may be positive electrode active material or negative electrode active material. The negative electrode active material contains a negative electrode active substance which may be a carbon-containing substance, a silicon-containing substance, a silicon-carbon composite, a metal, a metal oxide, a metal alloy, or a polymer, preferably a carbon-containing substance or a silicon-containing substance, but not limited thereto. In particular, the carbon-containing material may be mesophase graphite powder (MGP), non-graphitizing carbon, coke, graphite, glassy carbon, carbon fiber, activated carbon, carbon black, or calcined polymer, but not limited thereto. Among these, the coke includes pitch coke, needle-like coke, or petroleum coke, etc.; and the calcined polymer is obtained by calcining a polymer such as phenol-formaldehyde resin or furan resin at an appropriate temperature for carbonation. The silicon-containing substance has an excellent ability to form alloy with lithium ions and an excellent ability to extract lithium ions from alloyed lithium, and when used in a lithium ion secondary batteries, the silicon-containing substance can achieve the advantage of high energy density. The silicon-containing substance may be used in combination with cobalt (Co), iron (Fe), tin (Sn), nickel (Ni), copper (Cu), manganese (Mn), zinc (Zn), indium (In), silver (Ag), titanium (Ti), germanium (Ge), bismuth (Bi), antimony (Sb), chromium (Cr), ruthenium (Ru), molybdenum (Mo), or a combination thereof, to form an alloy material. The elements of metal or metal alloy may be selected from the group consisting of: cobalt, iron, tin, nickel, copper, manganese, zinc, indium, silver, titanium, germanium, bismuth, antimony, chromium, ruthenium, and molybdenum, but not limited thereto. The examples of the metal oxide are iron(III) oxide, iron(II) diiron (III) oxide, ruthenium(IV) dioxide, molybdenum(IV) dioxide, and molybdenum(VI) oxide, but not limited thereto. The examples of the polymer are polyacetylene and polypyrrole, but not limited thereto.

The active materials can be added with an adjuvant additive as needed, and the adjuvant additive may be binder and/or weak acid reagent, but not limited thereto. Preferably, the binder may be polyvinylidene fluoride (PVDF), styrene-butadiene rubber (SBR), carboxymethyl cellulose (CMC), poly(acrylic acid) (PAA), polyacrylonitrile (PAN), or polyacrylate, and the weak acid reagent may be oxalic acid, citric acid, lactic acid, acetic acid, or formic acid.

### <Lithium ion secondary battery>

A third aspect of the present disclosure provides a lithium ion secondary battery, comprising the current collector/electrode of the present disclosure.

According to the present disclosure, based on the composition of an positive electrode slurry, the lithium ion secondary battery may be a $LiCoO_2$ battery, a $LiNiO_2$ battery, a $LiMn_2O_4$ battery, a $LiCo_XNi_1\text{-}XO_2$ battery, or a $LiFePO_4$ battery, and the like, but not limited thereto.

According to the present disclosure, the lithium ion secondary battery comprises an electrolytic solution comprising a solvent, an electrolyte, and an optional additive. The solvent in the electrolytic solution includes a non-aqueous solvent, e.g.: a cyclic carbonate such as ethylene carbonate (EC) or propylene carbonate (PC); a linear carbonate such as dimethyl carbonate (DMC), diethyl carbonate (DRC), or methyl ethyl carbonate (EMC); or a sultone, but not limited thereto. The solvent aforementioned can be used alone or in combination of two or more solvents. The electrolyte includes lithium hexafluorophosphate, lithium perchlorate, lithium tetrafluoroborate, lithium trifluoromethanesulfonate, lithium bis(oxalate)borate, and lithium bis(trifluoromethane sulfonamide), but not limited thereto.

In an embodiment, the lithium ion secondary battery may employ a solid electrolyte instead of the electrolytic solution described above. For example, the solid electrolyte may be crystalline electrolyte, glass electrolyte, or glass-ceramic electrolyte, or polymeric electrolyte, but not limited thereto. Specifically, the crystalline electrolyte may be a sulfide solid-state electrolyte such as lithium superionic conductor (LISICON) type or argyrodite type; or an oxide solid-state electrolyte such as garnet type, peroskite type, NASICON structure, etc., but not limited thereto. The glass-state electrolyte may be such as an oxide glass-state electrolyte or a sulfide glass-state electrolyte, but not limited thereto. The polymer electrolyte may be a pure solid-state electrolyte such as a polyethylene oxide-based (PEO-based), polypropylene oxide-based (PPO-based), etc; or a colloidal polymer electrolyte such as polyacrylonitrile-based (PAN-based), poly(methyl methacrylate)-based(PMMA-based), poly(vinyl chloride)-based (PVC-based), poly(vinylidene fluoride)-based (PVDF-based), etc., but not unsaturated thereto.

According to the present disclosure, the lithium ion secondary battery may be a laminated lithium ion secondary battery containing a negative electrode and an positive electrode laminated with a separator therebetween, and also be a spiral winding laminated lithium ion secondary battery containing continuous electrodes and a separator rolled up together, but not limited thereto. Depending on different applications, the lithium ion secondary battery of the present disclosure in a personal laptop, a mobile phone, an electric vehicle, an energy storage system can be processed into, for example, a cylindrical secondary battery, a prismatic secondary battery, a pouch secondary battery, or a button secondary battery, but not limited thereto.

The details will be illustrated more specifically further through the following examples. However, the interpretation of the present disclosure should not be limited to the description of the following examples.

EXAMPLES

A copper-containing electrolytic solution was formulated with the following materials, and a cathode titanium drum was rotated at a constant rate and contacted with the copper-containing electrolytic solution. The current was applied to the cathode titanium drum and an insoluble anode plate (i.e., as shown in the electro-deposition condition below), allowing the copper-containing electrolytic solution to be deposited on the surface of the cathode titanium drum to form an electrolytic copper foil. The electrolytic copper foil was then peeled off and directed to a series of rollers.

[Formulation of copper-containing electrolytic solution]

Copper sulfate ($CuSO_4$ $5H_2O$): 320 g/L
Sulfuric acid: 85 g/L
Chloride ions: 77 ppm
Additive: gelatin (Mw 40,000-60,000, purchased from KOEI Chemical Co., Ltd.), 20 ppm - 50 ppm

Decomposition product of gelatin (Mw 12,000-16,000), 5 ppm - 20 ppm
Ratio of the decomposition product of gelatin to gelatin was 0.2 to 0.5.
Sodium thiosulfate 5 ppm - 20 ppm.

The decomposition product of gelatin was prepared and used by the following method: adding gelatin and sodium thiosulfate into water and mixing to formulate an aqueous solution containing 20 g/L of gelatin and 20 g/L of sodium thiosulfate, placing a titanium plate as an anode and a copper plate as a cathode, and performing electrolysis at a current of 20 A/dm$^2$ for 10 seconds, to generate a small molecular decomposition product of gelatin (Mw 12,000-16,000). The aqueous solution therefore comprised the decomposition product of gelatin and equivalent sodium thiosulfate, and an appropriate amount of the aqueous solution aforementioned was added to the copper-containing electrolytic solution based on the entity of the copper-containing electrolytic solution.

[Electrolysis condition]

Temperature: 48°C
Current density: 44 A/dm$^2$
Thickness of electrolytic copper foil: 4 $\mu$m - 10 $\mu$m

Then, the electrolytic copper foil was delivered via a series of rollers to a rust-proof treatment device for rust-proof treatment. The electrolytic copper foil was immersed in a rust-proof cell filled with rust-proof solution, and rust-proof layers were formed on two surfaces of the electrolytic copper foil by electro-deposition using two sets of electrode plates.

[Formulation of rust-proof solution]

Chromium trioxide ($CrO_3$), concentration: 1.5 g/L

[Rust-proof treatment condition]

Temperature: 25°C
Current density: 0.5 A/dm$^2$
Electroplating time: 2 seconds

After the rust-proof treatment, the rust-proof treated electrolytic copper foil was directed further to a series of rollers, where excess rust-proof solution and other materials on the surface were removed with air knives to dry the copper foil, and the copper foil was rolled up to obtain a final copper foil. The copper foils prepared in Examples 1-7 were shown in Table 1, below.

**<Comparative Example>**

The copper foils in Comparative Examples 1-5 were prepared by the same process described in Examples except for the adjusted manufacturing parameter as shown in Table 1.

Table 1

| | Thickness (μm) | Total amount of gelatin and decomposition product of gelatin (ppm) | Gelatin (ppm) | decomposition product of gelatin (ppm) | Ratio of decomposition product of gelatin to gelatin |
|---|---|---|---|---|---|
| E1 | 6 | 30 | 20 | 10 | 0.50 |
| E2 | 6 | 60 | 40 | 20 | 0.50 |
| E3 | 6 | 30 | 25 | 5 | 0.20 |
| E4 | 6 | 60 | 50 | 10 | 0.20 |
| E5 | 6 | 30 | 22 | 8 | 0.36 |
| E6 | 4 | 60 | 40 | 20 | 0.50 |
| E7 | 10 | 30 | 25 | 5 | 0.20 |
| CE1 | 6 | 30 | 30 | 0 | 0.00 |
| CE2 | 6 | 35 | 30 | 5 | 0.17 |
| CE3 | 6 | 90 | 60 | 30 | 0.50 |
| CE4 | 6 | 30 | 0 | 30 | - |
| CE5 | 6 | 90 | 80 | 10 | 0.13 |

Test Methods

XRD analysis was performed on the copper foils prepared in the Examples and Comparative Examples to analysis their structure and texture.

[XRD analysis]

Instrument: Bruker D2 PHASER
Target: copper tubes
Ray: Cu-K$\alpha$ (1.5418 Å)
Voltage: 45 kV
Current: 40 mA
Scanning range: 40-95° in 2$\theta$
Scanning rate: 0.2°/sec

The texture coefficient of each copper foil was calculated by the following Formula (I):

$$TC(hkl) = \frac{I(hkl)/I_0(hkl)}{(1/n)\Sigma I(hkl)/I_0(hkl)} \quad (I)$$

In Formula (I), TC(hkl) represents the texture coefficient of crystal plane (hkl), with a larger value of TC reflecting a higher preferred orientation of the crystal plane. I(hkl) represents the diffraction intensity of the sample on crystal plane (hkl). $I_0$(hkl) represents the standard diffraction intensity on crystal plane (hkl) (i.e., the data tested on copper powder and specified by American Society for Testing and Materials (ASTM) PDF#040836). n represents the number of diffraction peaks in the range of specific diffraction angle ($2\theta$).

The produced copper foil was placed at a temperature of 35-45°C and RH of 10-25% for 3 days, to make it to be in a stable state. The texture coefficient of each crystal plane (TC(111), TC(200), TC(220), and TC(311)) and texture coefficient of each crystal plane (TC'(220) and TC'(311)) under the thermal condition (simulated with an annealing treatment at 200°C in a vacuum for 5 hrs) of each copper foil were obtained by XRD analysis on the deposition side of the electrolytic copper foil.

[Annealing treatment]

Instrument: DENG YNG DOV-30 oven
Vacuum level: 760 mmHg
Temperature: 200°C
Time: 2 hrs

Each copper foil was further tested for tensile strength and occurrence of wrinkles and cracks by using the following criteria and parameters.

[Tensile strength]

Criterion: IPC-TM-650 2.4.18
Instrument: SHIMADZU AG-I universal tensile testing machine
Specimen size: 100 mm (TD) x 12.7 mm (MD)
Temperature: 25°C
Clamp distance: 50 mm
Speed: 50 mm/min

[Occurrence of wrinkles and cracks in the copper foils]

10000 m of copper foil was produced continuously and wound, and inspected visually to see if visible wrinkles and/or cracks were present throughout the copper foil.

The results of texture coefficient, rate of texture coefficient change, tensile strength, deterioration rate of the tensile strength, and occurrence of wrinkles and cracks of each copper foil measured by the test methods described above were listed in Table 2 below.

Table 2

| | Stable state | | Thermal condition (heating at 200°C in a vacuum for 5 hrs) | | | | Stable state | | | Thermal condition (heating at 200°C in a vacuum for 5 hrs) | |
|---|---|---|---|---|---|---|---|---|---|---|---|
| | TC(220) | TC(311) | TC'(220) | TC'(311) | Rate of TC(220) change (%) | Rate of TC(311) change (%) | Wrinkles | Cracks | Tensile strength (kg/mm$^2$) | Tensile strength (kg/mm$^2$) | Tensile strength deterioration rate (%) |
| E1 | 2.69 | 0.86 | 2.65 | 0.84 | 1.5 | 2.33 | No | No | 66.4 | 64.4 | 3.0 |
| E2 | 2.69 | 0.8 | 2.76 | 0.83 | 2.6 | 3.75 | No | No | 65.6 | 60.8 | 7.3 |
| E3 | 1.47 | 0.94 | 1.44 | 0.90 | 2.0 | 4.26 | No | No | 52.4 | 51.1 | 2.5 |
| E4 | 2.06 | 1.06 | 2.12 | 1.04 | 2.9 | 1.89 | No | No | 57.3 | 52.9 | 7.7 |
| E5 | 1.48 | 0.87 | 1.51 | 0.85 | 2.0 | 2.30 | No | No | 56.5 | 54.4 | 3.7 |
| E6 | 2.70 | 0.82 | 2.63 | 0.81 | 2.6 | 1.22 | No | No | 68.0 | 63.3 | 6.9 |
| E7 | 1.43 | 0.94 | 1.46 | 0.92 | 2.1 | 2.13 | No | No | 53.1 | 51.3 | 3.4 |
| CE1 | 0.69 | 1.15 | 0.65 | 1.10 | 5.8 | 4.35 | Yes | No | 38.0 | 37.2 | 2.1 |
| CE2 | 1.02 | 0.99 | 1.04 | 1.03 | 2.0 | 4.04 | Yes | No | 42.0 | 39.3 | 6.4 |
| CE3 | 3.37 | 0.74 | 3.20 | 0.77 | 5.0 | 4.05 | No | Yes | 65.3 | 56.5 | 13.5 |
| CE4 | 4.32 | 0.72 | 4.39 | 0.69 | 1.6 | 4.17 | No | Yes | 71.3 | 56.3 | 21.0 |
| CE5 | 1.12 | 1.10 | 1.03 | 1.17 | 8.0 | 6.36 | No | No | 52.1 | 43.9 | 15.7 |

It could be seen from the results above, the copper foil of the present disclosure had high tensile strength and low deterioration rate of tensile strength under thermal condition, and had no problem with wrinkles or cracks developing in the copper foil during the manufacturing process. Also, the present disclosure showed that TC(220) and TC(311) of the copper foil were associated with the tensile strength and the deterioration rate of tensile strength under a thermal condition, wherein the copper foil with higher TC(220) had a higher tensile strength, and the copper foil with lower TC(220) and higher TC(311) had a lower tensile strength. In the present disclosure, TC(220) and TC(311) of the copper foil could be regulated by adding additives. These results sufficiently demonstrated that in the present disclosure, by regulating the crystalline orientation of a copper foil, particularly making the crystalline orientation of crystal plane (220) and crystal plane (311) higher, the copper foil had excellent mechanical properties (e.g., high tensile strength) and could withstand thermal conditions without easily degrading the mechanical properties (e.g., small deterioration rate of tensile strength under a thermal condition), so that it could be applied in lithium ion secondary batteries effectively and avoid thermal deterioration during charging-discharging cycles.

The above embodiments are used for only illustrating principles and effects of the present invention but not for limiting the present invention. Modifications and alternations can be made to above embodiments by anyone having ordinary skill in the art without departing from the spirit and scope of the present invention. Therefore, the range claimed by the present invention should be as the claims attached.

**Claims**

1. A copper foil for lithium ion secondary batteries, having two opposite sides, wherein the copper foil has a texture coefficient of the crystal plane (220) (TC(220)) of $\geq 1.36$ and a texture coefficient of the crystal plane (311) (TC(311)) of $\geq 0.79$.

2. The copper foil of claim 1, wherein the TC(220) is ranging from 1.36 to 2.75, and the TC(311) is ranging from 0.79 to 1.10.

3. The copper foil of claim 1, wherein the copper foil has a rate of TC(220) change of < 5% after being heated at 200°C in a vacuum for 5 hours.

4. The copper foil of claim 1, wherein the copper foil has a rate of TC(311) change of < 6% after being heated at 200°C in a vacuum for 5 hours.

5. The copper foil of claim 1, wherein the copper foil has a tensile strength of $\geq 50\text{kg/mm}^2$.

6. The copper foil of claim 1, wherein the copper foil has a tensile strength of $\geq 50$ kg/mm$^2$ after being heated at 200°C in a vacuum for 5 hours.

7. The copper foil of claim 2, wherein the copper foil has a tensile strength deterioration rate of $\leq 10\%$ after being heated at 200°C in a vacuum for 5 hours.

8. The copper foil of claim 1, which is a surface-treated copper foil comprising a copper layer and a rust-proof layer.

9. The copper foil of claim 8, wherein the rust-proof layer is on at least one surface of the copper layer, and the rust-proof layer is formed from an organic material or an inorganic material.

10. The copper foil of claim 9, wherein the inorganic material comprises at least one selected from the group consisting of chromium, nickel, zinc, cobalt, manganese, and tin.

11. The copper foil of claim 9, wherein the organic material comprises at least one selected from the group consisting of carbon, oxygen, nitrogen, sulfur, and silicon.

12. The copper foil of claim 11, wherein the organic material comprises at least one selected from the group consisting of porphyrin group, silane group, benzotriazole and triazine trithiol.

13. A current collector for lithium ion secondary batteries, comprising the copper foil of any one of claims 1-12.

14. A lithium ion secondary battery, comprising the current collector of claim 13.

FIG. 1

FIG. 2